Europäisches Patentamt

European Patent Office

Office européen des brevets

(19)

(11) **EP 0 597 760 B1**

(12) **FASCICULE DE BREVET EUROPEEN**

(45) Date de publication et mention
de la délivrance du brevet:
**05.03.1997   Bulletin 1997/10**

(51) Int Cl.⁶: **G01C 21/00**, G08G 5/04,
G05D 1/06

(21) Numéro de dépôt: **93402726.9**

(22) Date de dépôt: **05.11.1993**

(54) **Dispositif d'évitement de collisions pour aéronef notamment avec le sol**

Gerät zur Vermeidung von Flugzeugkollisionen, insbesondere mit dem Bodem

Apparatus for aircraft collision avoidance, particularly with the ground

(84) Etats contractants désignés:
**BE DE GB NL**

(30) Priorité: **10.11.1992  FR 9213529**

(43) Date de publication de la demande:
**18.05.1994   Bulletin 1994/20**

(73) Titulaire: **SEXTANT AVIONIQUE**
**F-92360 Meudon-la-Forêt (FR)**

(72) Inventeurs:
- **Denoize, Xavier**
  **F-92402 Courbevoie Cedex (FR)**
- **Faivre, François**
  **F-92402 Courbevoie Cedex (FR)**

(74) Mandataire: **Benoit, Monique et al**
**THOMSON-CSF-S.C.P.I.,**
**13, Avenue du Président**
**Salvador Allende**
**94117 Arcueil Cédex (FR)**

(56) Documents cités:
DE-A- 2 801 045             GB-A- 2 144 007
US-A- 5 142 480

- **IEEE PLANS'90 POSITION LOCATION AND
  NAVIGATION SYMPOSIUM, 20.3-23-3.1990, Las
  Vegas, NV, US; PRIESTLEY: 'Terrain Referenced
  Navigation'**
- **PATENT ABSTRACTS OF JAPAN vol. 017, no.
  141 (P-1506)23 Mars 1993 & JP-A-43 015 084
  (KAWASAKI HEAVY IND LTD) 6 Novembre 1992**

**Description**

La présente invention concerne un dispositif d'évitement de collisions pour aéronef notamment avec le sol. Elle s'applique notamment à des avions de lignes. Plus généralement, elle s'applique à tous aéronefs amenés au cours de leur mission à se rapprocher trop près du sol, dans le cas de proximité de montagnes par exemple, ou à évoluer dans des secteurs de l'espace aérien dans lesquels ils représentent un danger ou sont eux-mêmes en danger, dans des zones d'accès interdit par exemple.

Des dispositifs d'évitement de collision entre le sol et des aéronefs sont connus. Ces dispositifs se caractérisent principalement par l'utilisation de radioaltimètres, de calculateurs donnant la hauteur barométrique à partir de mesures de pression et de température, et de moyens de navigation tels qu'une centrale à inertie ou un système de gestion du vol. Le principe de ces dispositifs réside dans l'exploitation d'une hauteur altimétrique, prise par rapport au sol, et dans l'exploitation des variations de la hauteur radioaltimétrique ou barométrique. Cette dernière est notamment utilisée à cause de sa plus grande précision pour les hauteurs importantes par rapport à la variation de hauteur altimétrique. Ces distances par rapport au sol sont comparées à des valeurs de seuil qui dépendent elles-mêmes des valeurs de hauteurs et de la configuration de l'avion, suivant que son train, ses volets ou ses becs sont sortis par exemple. Lorsque les paramètres mesurés, hauteurs et variations de hauteurs en fonction du temps notamment, dépassent les valeurs de seuils, une alarme est émise à destination de l'équipage. Cependant, de tels dispositifs présentent l'inconvénient de donner des mesures trop tardives par rapport à l'évolution de l'avion donc de générer des alarmes souvent trop tardives empêchant les équipages de réagir à temps et susceptibles en conséquence de ne pas empêcher des collisions. Ce fait peut notamment se produire en cas de brusque remontée du relief, quand l'avion se dirige vers le flanc d'une montagne abrupte par exemple. Un autre inconvénient des dispositifs connus est qu'ils génèrent des alarmes injustifiées, encore appelées fausses alarmes. Celles-ci peuvent notamment intervenir quand les avions survolent des montagnes de faible altitude avec une bonne hauteur de sécurité mais où les remontées de relief par exemple, pourtant sans danger, provoquent ces fausses alarmes. Celles-ci diminuent gravement la crédibilité de ces dispositifs anticollision.

Un brevet US-A-5,142,480 divulgue un système permettant à un équipage de déterminer s'il peut rejoindre de façon sûre un terrain d'atterrissage après une panne moteur. Une demande de brevet P-A-4-315084 présente un système qui reconstruit une image du terrain.

Des améliorations ont été apportées aux dispositifs d'anticollision, notamment en introduisant des bases de données qui permettent de moduler la valeur des seuils à prendre en compte en fonction de la position géographique des avions. Ces améliorations sont susceptibles de diminuer les fausses alarmes. Cependant, elles nécessitent des bases de données adaptées à chaque type de terrain. Dans la continuité de cette dernière solution, il est envisageable de disposer d'un modèle numérique de terrain qui permettrait de connaître en permanence en fonction de sa position, la nature du relief en amont d'un avion. Néanmoins, l'utilisation d'un tel modèle nécessite une base de données décrivant le relief de façon suffisamment précise, donc demandant des mémoires de grande taille. A cet inconvénient, s'ajoute la nécessité de procédures d'échanges et de mises à jour d'une telle base de données, ce qui complique son utilisation. Le grand nombre d'informations stockées implique par ailleurs des risques d'erreurs non négligeables.

Le but de l'invention est de pallier les inconvénients précités, notamment en s'affranchissant des aléas de variations de reliefs et en déterminant la position de l'aéronef non plus par rapport au sol, mais par rapport à des altitudes de sécurité connues.

A cet effet, l'invention a pour objet un dispositif d'évitement de collisions pour un aéronef, tel que défini par la revendication 1.

L'invention a pour principaux avantages qu'elle permet de prédire les risques de collision et contribue donc à diminuer les temps de réaction des équipages vis-à-vis de ces risques, qu'elle diminue les fausses alarmes, qu'elle améliore la fiabilité des systèmes d'anticollision et qu'elle s'adapte à tous types de reliefs, de secteurs d'espaces aériens ou de contraintes de navigation.

D'autres caractéristiques et avantages de l'invention apparaîtront au cours de la description qui suit faite en regard des dessins annexés qui représentent:

- la figure 1, une illustration du principe de fonctionnement d'un dispositif selon l'invention ;
- la figure 2, un synoptique d'un dispositif selon l'invention ;
- la figure 3, un mode de réalisation possible d'un dispositif selon l'invention ;
- la figure 4, deux exemples de trajectoires prédites relativement à un aéronef;
- les figures 5 et 6, un exemple d'application du dispositif selon l'invention.

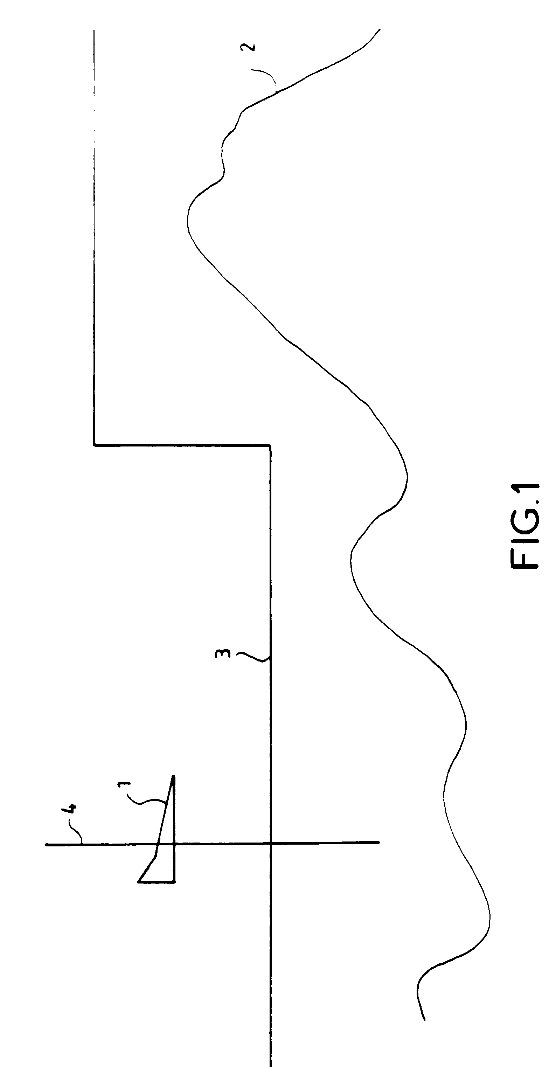

La figure 1 illustre le principe de fonctionnement d'un dispositif selon l'invention. Une description des altitudes de sécurité de l'aéronef 1 est mémorisée. Ces altitudes sont par exemple définies par rapport au relief du terrain 2, par rapport à des zones d'espace aérien interdites ou par rapport à des procédures de vol ou d'atterrissage. En fonction de la localisation géographique de l'aéronef et en fonction de la description des altitudes de sécurité, un plancher aérien 3 est construit autour de la verticale 4 de l'aéronef, le plancher constituant en fait une limite aérienne pour l'aéronef en dessous de laquelle un risque de collision est possible. Si la localisation géographique de l'aéronef est une approche d'aéroport, la description des altitudes de sécurité conduit à un type de plancher prenant en compte notamment les procédures d'atterrissage. Si cette localisation est dans une région montagneuse, le relief est pris en considération. Le plancher 3 n'épouse pas les accidents de relief du terrain 2 mais est défini par exemple par une altitude globale. Cette altitude globale est cependant définie localement. En cas de remontée du terrain 2, le plancher 3 devient défini par une nouvelle altitude globale supérieure au point culminant du relief. En cas d'atterrissage, cette altitude globale est définie successivement par les différentes altitudes minimales d'atterrissage ainsi que par les couloirs d'atterrissage par exemple.

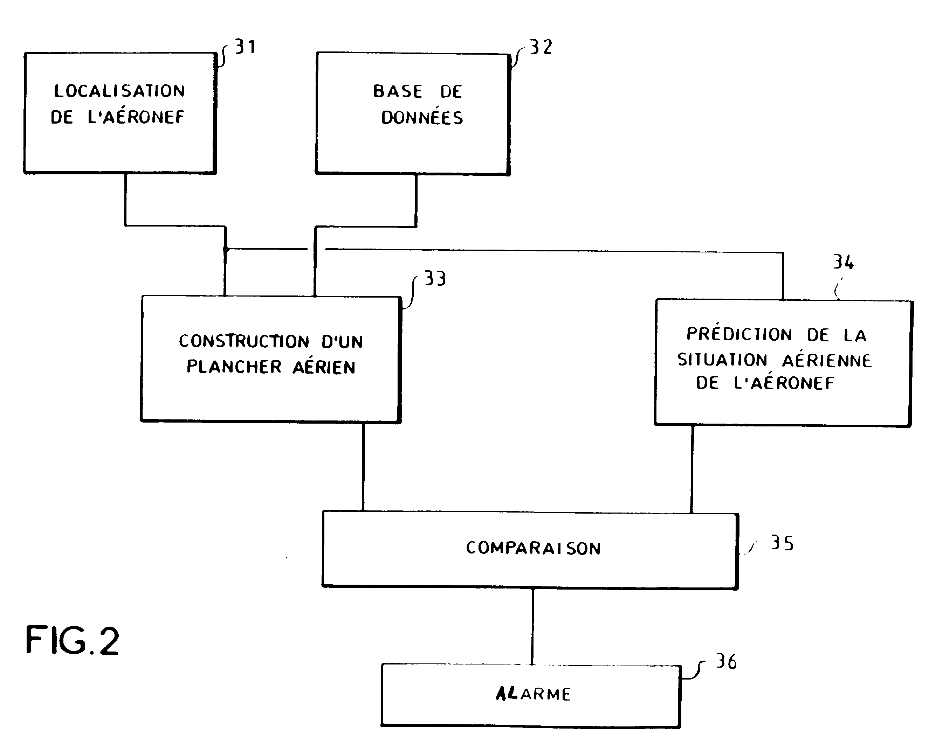

La figure 2 présente un synoptique d'un dispositif selon l'invention. Ce dispositif comprend au moins des moyens de localisation 31 de l'aéronef qui le contient et une base de données 32 mémorisant notamment une description d'altitudes de sécurités. Des moyens de construction, par calcul, d'un plancher aérien autour de la verticale de l'aéronef 33 sont reliés aux moyens de localisation 31 et à la base de données 32. A partir de la localisation géographique de l'aéronef définie par les moyens de localisation 31 et des altitudes de sécurité fonction de la géographie des régions survolées mémorisées par la base de données 32, les moyens de construction définissent un plancher aérien en dessous duquel l'aéronef risque d'entrer en collision ou n'est plus en sécurité. Ce plancher aérien est par exemple du type du plancher 3 de la figure 1.

Des moyens de prédiction de la situation aérienne de l'aéronef 34, notamment de sa position verticale, sont reliés aux moyens de localisation 31. Ces moyens de prédiction 34 évaluent la situation aérienne de l'aéronef entre un premier instant to donné, qui est par exemple celui de construction du plancher aérien 3 autour de l'aéronef et un deuxième instant donné to +Δt. Entre chaque construction de planchers, plusieurs prédictions de situations de l'aéronef peuvent par exemple être réalisées. Cette prédiction est réalisée notamment à partir de la situation connue de l'aéronef, localisation géographique et position verticale, au premier instant donné et de son vecteur vitesse à cet instant.

Des moyens de comparaison 35 sont reliés aux moyens de construction 33 et aux moyens de prédiction 34. Ces moyens de comparaison 35 comparent la situation prédite de l'aéronef par rapport au plancher aérien construit au premier instant to. Si la situation prédite de l'aéronef est au dessus du plancher aérien, il est jugé être en sécurité. Dans le cas contraire, un risque de collision est possible et une alarme 36, reliée aux moyens de comparaison est déclenchée.

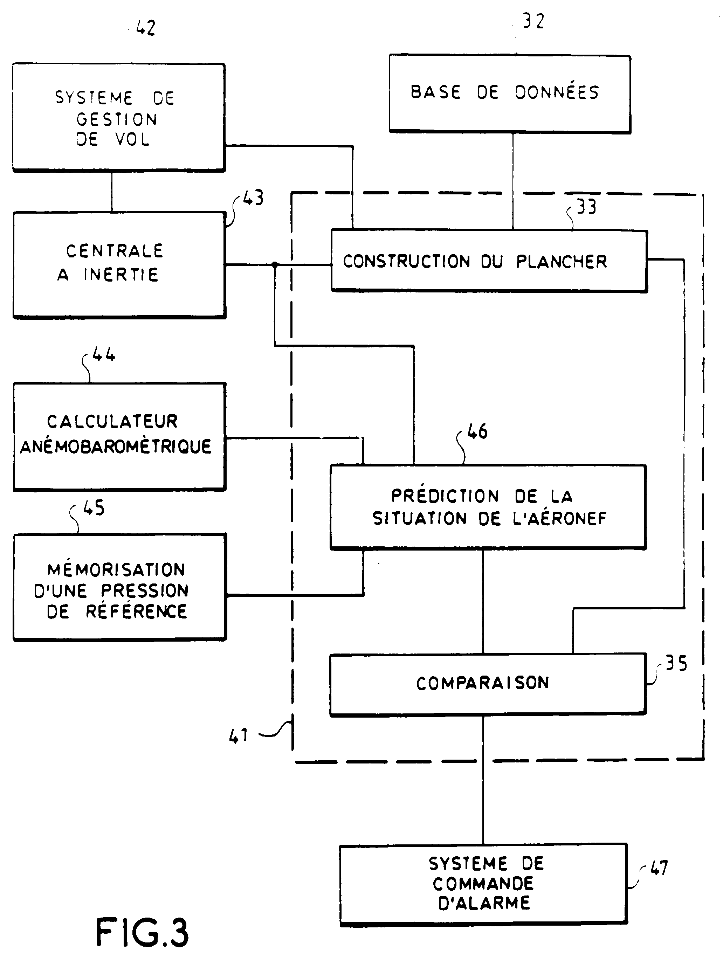

La figure 3 présente des modes de réalisation possibles des moyens précités. La construction du plancher, la prédiction de la situation de l'aéronef et la comparaison précitées sont par exemple réalisées par un seul calculateur 41. Cependant, un calculateur pourrait être affecté à chacune des fonctions précédentes. Les moyens de localisation de l'aéronef sont par exemple constitués du système de gestion de vol 42 et de la centrale à inertie 43 de l'aéronef. La localisation de l'aéronef, c'est-à-dire sa longitude et sa latitude, est normalement définie par le système de gestion de vol 42 qui utilise des informations fournies par la centrale à inertie 43 et par des capteurs connus de l'homme du métier. En cas de panne du premier 42, cette dernière 43 peut fournir les données précitées.

La base de données 32 contient notamment l'ensemble des informations permettant de définir les planchers relatifs au vol de l'aéronef, c'est-à-dire une description des altitudes de sécurité à respecter, fonction notamment des reliefs survolés, des zones aériennes interdites et des procédures de vol, d'atterrissage ou de décollage. A cet effet, elle contient par exemple une description des balises de navigation relatives à chaque aéroport ainsi que leurs positions géographiques, une description des procédures d'approche pour chaque aéroport et une description des hauteurs minimales de sécurité à respecter lorsqu'aucun aéroport n'est à proximité ou lorsque l'aéronef est en croisière. La base de données 32 peut contenir par exemple une description des aéroports du monde entier.

La description des procédures d'approche est par exemple constituée d'un certain nombre de segments rectilignes ou en forme d'arc pour lesquels sont donnés le point initial et le point final en position absolue, c'est-à-dire en latitude et longitude, ou en position relative par rapport à une balise de navigation, ainsi que les hauteurs de sécurité à respecter au passage entre ces deux points.

La description des hauteurs minimales de sécurité peut être obtenue en prenant par exemple un carroyage correspondant aux lignes des parallèles et des méridiens de la surface terrestre et en affectant à chaque carré une valeur de hauteur minimale de sécurité.

Une autre solution d'organisation de la base de données 32 consiste à ce qu'elle mémorise toutes les altitudes de sécurités au lieu des descriptions précitées, néanmoins une telle organisation demande notamment plus de place en mémoire. En revanche, elle peut avoir l'avantage de réduire des temps de calcul ou de construction de planchers.

Les moyens de construction du plancher 33 font partie du calculateur 41. Celui-ci calcule par exemple les planchers autour de l'aéronef en fonction des données transmises par le système de gestion de vol 42 et la centrale à inertie 43 pour la définition de la localisation de l'aéronef d'une part, et des données lues dans la base de données 32 pour la définition des hauteurs de sécurité à respecter en fonction de la localisation géographique de l'aéronef d'autre part, la hauteur du plancher ne devant pas être inférieure à ces hauteurs de sécurités.

Les moyens de prédiction de la situation aérienne de l'aéronef sont constitués par exemple de la centrale à inertie 43, d'un calculateur anémobarométrique 44 , d'un moyen de mémorisation d'une pression de référence 45 et d'une partie 46 du calculateur 41. Cette partie 46 est affectée au calcul de la prédiction de la situation aérienne de l'aéronef en fonction du vecteur vitesse de ce dernier fourni par la centrale à inertie 43 et de la situation de l'aéronef à un premier instant to. La situation de l'aéronef, définie notamment par sa position verticale, est par exemple déterminée par le niveau de pression atmosphérique auquel se situe l'aéronef. Chaque valeur de pression est liée à une altitude, indépendamment notamment des accidents de reliefs de la zone que survole l'aéronef en ne prenant pas en compte des remontées de relief sans danger ou peu significatives. A cet effet, le calculateur anémobarométrique 44 calcule une valeur de pression dont la partie 46 du calculateur 41 affectée à la prédiction déduit une altitude en fonction de la pression de référence mémorisée dans les moyens de mémorisation 45. Cette pression de référence est par exemple la pression au niveau du sol ou la pression QNH connue de l'homme du métier. Les moyens de mémorisation 45 sont mis à jour tout au long de la mission de l'aéronef en fonction de nouvelles pressions de référence à prendre en compte. A l'approche d'un aéroport, la pression de référence peut par exemple être fournie au pilote depuis l'aéroport.

La prédiction de la situation aérienne de l'aéronef est par exemple réalisée par le calculateur 41 à partir du vecteur vitesse de l'aéronef fourni par la centrale à inertie 43 au premier instant to donné et à partir de la position connue de l'aéronef à ce premier instant, c'est-à-dire notamment à partir de sa latitude et de sa longitude fournie par le système de gestion de vol 42, de son altitude calculée à l'aide du calculateur anémobarométrique 44 et de la pression de référence 45. Le calculateur 41 applique par exemple un modèle de prédiction de trajectoire dite d'évitement décrivant la situation aérienne de l'aéronef. Ce modèle utilise par exemple le vecteur vitesse, noté $\vec{V}$, de l'aéronef, un temps de retard, noté $\delta t$, et une ressource de l'aéronef, notée G, à facteur de charge maximale de celui-ci par exemple. Cette ressource définit notamment la capacité de l'aéronef à se cabrer. La trajectoire d'évitement est donc obtenue par exemple par un segment de droite colinéaire au vecteur vitesse $\vec{V}$ et de longueur égale au produit V.$\delta t$(1) puis par une courbe représentant par exemple sensiblement un arc de cercle tangent au segment précédent, dirigé vers le haut, et de rayon R tel que G = ($V^2$/R)+ 1 (2), V représentant le module du vecteur vitesse $\vec{V}$.

Lorsque le modèle de trajectoire d'évitement conduit à trouver certains de ses points en dessous du plancher précédemment calculé, le dispositif selon l'invention active par exemple une alarme, visuelle ou sonore, afin de prévenir l'équipage de l'imminence de la présence de l'aéronef dans une zone d'insécurité.

Les moyens de comparaison 35 font par exemple partie du calculateur 41. Celui-ci compare les trajectoires d'évitement calculées par rapport aux planchers calculés. Il est relié en sortie à un système de commande d'alarme 47 qu'il active notamment quand une trajectoire passe en dessous d'un plancher.

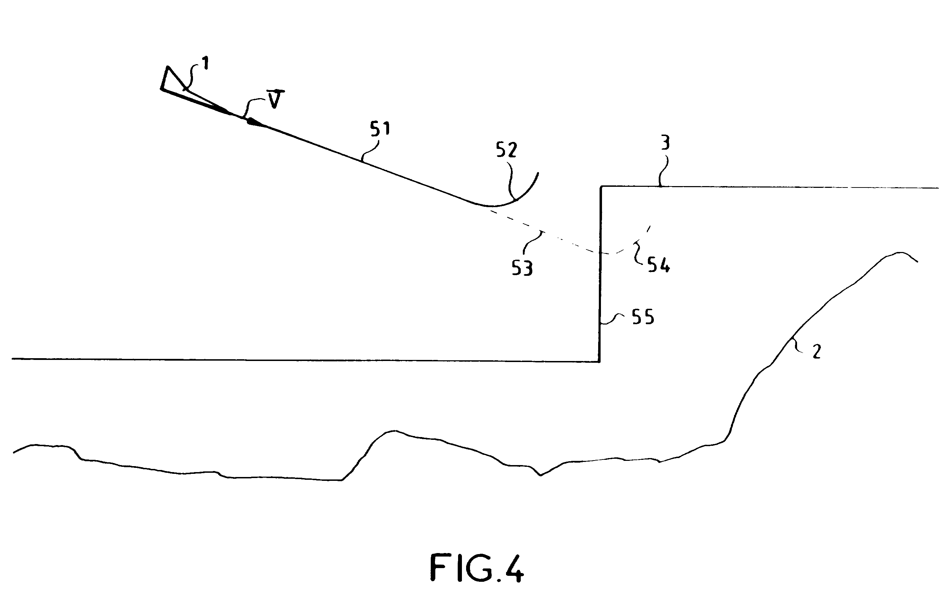

La figure 4 présente deux exemples de trajectoire d'évitement calculée relativement à l'aéronef 1 survolant le terrain 2 et en dessous duquel est défini le plancher 3, calculé par exemple par le calculateur 41. Une première trajectoire, calculée notamment en fonction du vecteur vitesse $\vec{V}$ de l'aéronef 1 est constituée d'un segment 51 colinéaire au vecteur vitesse $\vec{V}$ et d'une courbe représentant par exemple sensiblement un arc de cercle 52 tangente au rayon 51. Ce segment 51 et cette courbe 52 sont alors par exemple calculés conformément aux relations (1) et (2) précédentes. Cette première trajectoire 51, 52 ne passe pas en dessous du plancher 3. Une deuxième trajectoire est constituée par exemple d'un segment 53 prolongeant le segment précédent 52 et d'un arc de cercle 54. Cette deuxième trajectoire 53, 54 passe en dessous du plancher 3, par exemple, à cause de la trop grande vitesse de l'avion 1 qui empêche l'avion de reprendre de la hauteur avant la remontée 55 du plancher 3, cette dernière étant due notamment à une élévation du relief du terrain 2. Cette remontée 55 est par exemple verticale. Dans ce dernier cas, une alarme prévient par exemple l'équipage pour qu'il fasse reprendre de l'altitude à l'aéronef 1 ou lui fasse changer de trajectoire. En effet, les trajectoires d'évitement 51, 52, 53, 54 sont des trajectoires qui laissent notamment un temps de réaction à l'aéronef pour éviter de passer en dessous du plancher 3 et donc de rester en sécurité. A la suite d'une réaction de l'aéronef due à une trajectoire d'évitement 53, 54 passant en dessous du plancher 3, une autre prédiction de trajectoire d'évitement est par exemple réalisée pour vérifier le chemin de cette nouvelle trajectoire et vérifier notamment si elle se situe entièrement au dessus du plancher 3.

Ce plancher 3 est calculé par les moyens de construction 33 ou le calculateur 46 tout au long du vol de l'aéronef 1. Le temps entre le calcul de deux planchers successifs dépend notamment de la vitesse de l'avion. Ces calculs peuvent être effectués périodiquement par exemple, la période étant telle que deux planchers calculés successivement se recouvrent au moins légèrement afin d'éviter des zones d'incertitudes. Des prédictions de la situation aérienne de l'aéronef sont par exemple périodiquement effectuées de manière à permettre en permanence à l'équipage de réagir à un risque de collision.

Le calcul de plancher a été défini précédemment à partir de pressions atmosphériques définissant des altitudes, notamment indépendantes des accidents de relief que survole l'avion. Les altitudes définissant les planchers peuvent par exemple ne pas utiliser les pressions atmosphériques. Ces altitudes peuvent être fournies par un récepteur GPS à partir d'un système constitué de plusieurs satellites géostationnaires associé à un modèle de géolde. Les satellites peuvent être au nombre de quatre par exemple. Ces récepteurs GPS, connus de l'homme du métier, permettent à partir d'un modèle géoïde de référence décrivant la Terre, de mesurer l'altitude d'un aéronef. GPS sont les initiales de l'expression anglo-saxonne "Global Positionning System". Le récepteur GPS étant contenu dans l'avion, il reçoit des signaux en provenance des quatre satellites permettant à un calculateur, par exemple le calculateur 41 précité, de déterminer l'altitude de l'aéronef.

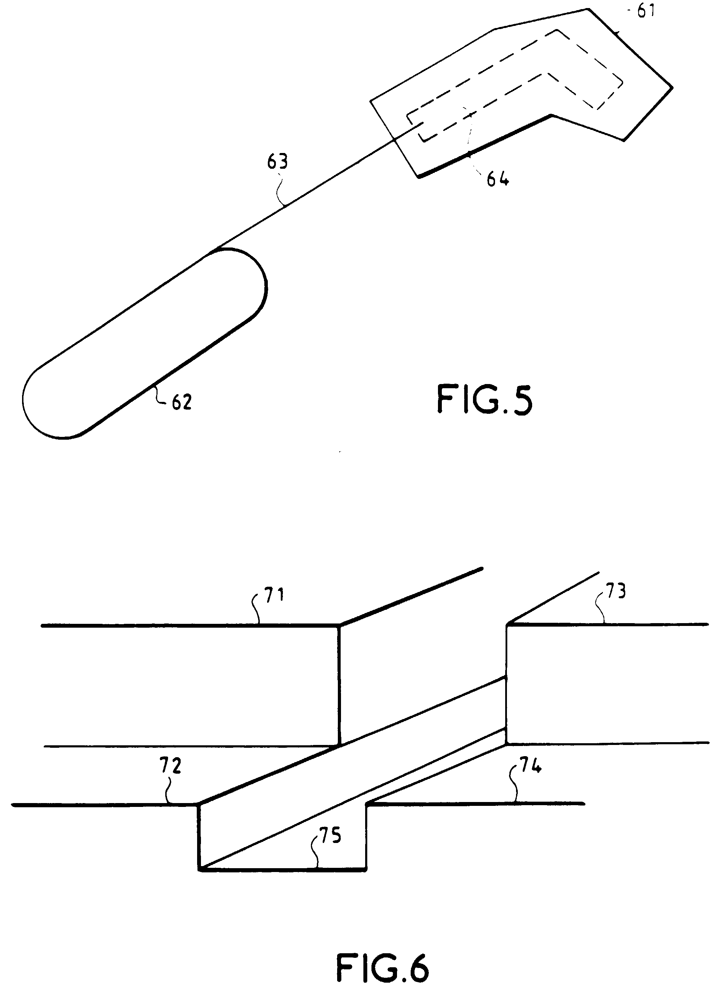

Les figures 5 et 6 présentent un exemple d'application du dispositif selon l'invention à l'approche d'un aéroport.

A l'approche d'un aéroport 61 représenté en figure 5, un aéronef contenant le dispositif selon l'invention emprunte une voie aérienne d'attente 62, fermée, avant de s'engager dans un couloir d'atterrissage pour atterrir sur une piste 64. De l'ensemble des informations contenues dans la base de données 32, et notamment à partir des procédures d'approche et des altitudes de sécurité à respecter, les moyens de construction 33, le calculateur 46 par exemple, définissent un plancher dont une partie est représentée à titre d'exemple en figure 6.

Ce plancher est constitué de plusieurs altitudes constantes 71, 72, 73, 74, 75 dont chacune est supérieure ou égale à l'altitude de sécurité que doit respecter l'aéronef au dessus de chacune d'elle. La partie 75 de plancher ayant l'altitude la plus basse constitue par exemple une partie du plancher du couloir d'atterrissage 63.

La sûreté de fonctionnement du dispositif selon l'invention peut être accrue en lui associant par exemple un radioaltimètre pour la vérification des altitudes. Quand celles-ci sont définies par des mesures de pressions, un récepteur GPS peut être aussi utilisé pour vérifier l'altitude de l'aéronef par rapport à une géoïde de référence.

Les planchers 3, 71, 72, 73, 74, 75 définis autour de la verticale de l'aéronef 1 ont par exemple un nombre fini de niveaux d'altitudes comme le montrent les figures 1 et 6. Il est possible d'envisager des planchers d'altitudes continûment variables. De tels planchers, permettent notamment au dispositif selon l'invention d'être opérationnel pratiquement jusqu'à l'atterrissage de l'aéronef sur le sol.

## Revendications

1. Dispositif d'évitement de collisions pour un aéronef (1), comportant :

   - des moyens de localisation géographique (31, 41, 42, 43) de l'aéronef,
   - des moyens de prédiction (34, 41, 43, 44, 45, 46) de la situation aérienne (51, 52, 53, 54) de l'aéronef (1) entre un premier instant donné et un deuxième instant donné, reliés aux moyens de localisation (31, 41, 42, 43), l'altitude de l'aéronef (1) étant connue au premier instant donné,
   - des moyens de comparaison (35, 41) de la situation aérienne prédite de l'aéronef (1) par rapport à un seuil caractérisé en ce qu'il comprend en outre :
   - une base de données (32) contenant une description des altitudes de sécurité à respecter, fonctions au moins des lieux géographiques,
   - des moyens de construction par calcul (33, 41) d'un plancher (3, 71, 72, 73, 74, 75) aérien autour de la verticale (4) de l'aéronef (1) fonction de la localisation géographique de l'aéronef, ces moyens (33, 46) étant reliés aux moyens de localisation (31, 41, 42, 43) et à la base de données (32), l'altitude du plancher étant supérieure ou égale aux altitudes de sécurité autour de la verticale (4) de l'aéronef (1), le plancher étant calculé tout au long du vol de l'aéronef,

   les moyens de comparaison (35, 41) comparant la situation aérienne prédite de l'aéronef (1) par rapport au plancher construit (3, 71, 72, 73, 74, 75), ces moyens (35) étant reliés aux moyens de prédiction (34, 46) et aux moyens de construction (33), une alarme (36, 47) étant déclenchée quand le résultat de la comparaison (35) indique qu'une situation aérienne prédite (53, 54) de l'aéronef est en dessous du plancher (3).

2. Dispositif selon la revendication 1, caractérisé en ce que l'altitude de l'aéronef (1) est définie par un niveau de pression.

3. Dispositif selon la revendication 2, caractérisé en ce que les moyens de prédiction de la situation aérienne (51, 52, 53, 54) comportent un calculateur anémobarométrique (44) et des moyens de mémorisation d'une pression de référence (45).

4. Dispositif selon la revendication 1, caractérisé en ce que l'altitude de l'aéronef (1) est définie par des signaux transmis par des satellites géostationnaires en fonction d'un modèle de géoïde de référence

5. Dispositif selon l'une quelconque des revendications précédentes, caractérisé en ce que les moyens de localisation géographique (31) de l'aéronef comportent le système de gestion de vol (42) et la centrale à inertie (43) de l'aéronef.

6. Dispositif selon l'une quelconque des revendications précédentes, caractérisé en ce que la base de données (32) comprend une description des balises de navigation relatives à chaque aéroport (61), une description des procédures d'approche pour chaque aéroport (61) et une description des hauteurs minimales de sécurité à respecter lorsqu'aucun aéroport n'est à proximité ou lorsque l'aéronef est en croisière.

7. Dispositif selon l'une quelconque des revendications précédentes, caractérisé en ce que la situation aérienne prédite de l'aéronef (1) est décrite par une trajectoire constituée d'un segment colinéaire (51, 53) au vecteur vitesse ($\vec{V}$) de l'aéronef (1) et d'une courbe étant sensiblement un arc de cercle (52, 54) tangent au segment (51, 53) et dirigé vers le haut, le segment étant proportionnel à la vitesse (V) de l'aéronef (1) et le rayon de l'arc de cercle étant fonction du carré de la vitesse (V) de l'aéronef et de sa capacité à se cabrer.

8. Dispositif selon l'une quelconque des revendications précédentes, caractérisé en ce qu'un nouveau plancher (3) est calculé périodiquement par les moyens de construction (33, 41).

9. Dispositif selon l'une quelconque des revendications précédentes, caractérisé en ce qu'une nouvelle situation aérienne (51, 52, 53, 54) de l'aéronef (1) est calculée périodiquement par les moyens de prédiction (33, 41, 43, 44, 45, 46).

10. Dispositif selon l'une quelconque des revendications précédentes, caractérisé en ce qu'il comporte en outre un altimètre pour vérifier les altitudes mesurées.

**Patentansprüche**

1. Vorrichtung zur Vermeidung von Kollisionen für ein Flugzeug (1), die aufweist:

   - Mittel zur geographischen Ortung (31, 41, 42, 43) des Flugzeugs,
   - Mittel (34, 41, 43, 44, 45, 46) zur Vorhersage der Lage (51, 52, 53, 54) des Flugzeugs (1) zwischen einem ersten gegebenen Zeitpunkt und einem zweiten gegebenen Zeitpunkt, die mit den Ortungsmitteln (31, 41, 42, 43) verbunden sind, wobei die Höhe des Flugzeugs (1) zum ersten gegebenen Zeitpunkt bekannt ist,
   - Mittel (35, 41) zum Vergleich der vorhergesagten Lage des Flugzeugs (1) mit einem Schwellwert, dadurch gekennzeichnet, daß sie weiter aufweist:
   - eine Datenbank (32), die eine Beschreibung der zu respektierenden Sicherheitshöhen in Abhängigkeit mindestens von den geographischen Orten enthält,
   - Mittel (33, 41) zur Berechnung eines Luft-"Bodens" (3, 71, 72, 73, 74, 75) um die Vertikale (4) zum Flugzeug (1) in Abhängigkeit von der geographischen Lage des Flugzeugs, wobei diese Mittel (33, 46) mit den Ortungsmitteln (31, 41, 42, 43) und der Datenbank (32) verbunden sind, wobei die Höhe des Bodens mindestens den Sicherheitshöhen um die Vertikale (4) zum Flugzeugs (1) gleicht, wobei der Boden während des ganzen Flugs des Flugzeugs berechnet wird, wobei die Vergleichsmittel (35, 41) die vorhergesagte Lage des Flugzeugs (1) mit dem konstruierten Boden (3, 71, 72, 73, 74, 75) vergleichen, wobei diese Mittel (35) mit den Vorhersagemitteln (34, 46) und den Boden-Konstruktionsmitteln (33) verbunden sind, wobei ein Alarm (36, 47) ausgelöst wird, wenn das Ergebnis des Vergleichs (35) angibt, daß eine vorhergesagte Lage (53, 54) des Flugzeugs sich unter dem Boden (3) befindet.

2. Vorrichtung nach Anspruch 1, dadurch gekennzeichnet, daß die Höhe des Flugzeugs (1) durch ein Druckniveau bestimmt wird.

3. Vorrichtung nach Anspruch 2, dadurch gekennzeichnet, daß die Mittel zur Vorhersage der Lage (51, 52, 53, 54) des Flugzeugs einen anemobarometrischen Rechner (44) und Mittel zur Speicherung eines Bezugsdrucks (45) enthalten.

4. Vorrichtung nach Anspruch 1, dadurch gekennzeichnet, daß die Höhe des Flugzeugs (1) von Signalen definiert wird, die von geostationären Satelliten in Abhängigkeit von einem Bezugs-Geoid-Modell geliefert werden.

5. Vorrichtung nach einem beliebigen der vorhergehenden Ansprüche, dadurch gekennzeichnet, daß die Mittel zur geographischen Ortung (31) des Flugzeugs das Flugüberwachungssystem (42) und die Trägheitszentrale (43) des Flugzeugs enthalten.

6. Vorrichtung nach einem beliebigen der vorhergehenden Ansprüche, dadurch gekennzeichnet, daß die Datenbank (32) eine Beschreibung der Navigationsbaken jedes Flughafens (61) eine Beschreibung der Anflugmanöver für jeden Flughafen (61) und eine Beschreibung der Mindest-Sicherheitshöhen enthält, die zu respektieren sind, wenn kein Flughafen in der Nähe ist oder wenn das Flugzeug sich auf Reisehöhe befindet.

7. Vorrichtung nach einem beliebigen der vorhergehenden Ansprüche, dadurch gekennzeichnet, daß die vorhergesagte Lage des Flugzeugs (1) von einer Flugbahn beschrieben wird, die aus einem kolinearen Segment (51, 53) mit dem Geschwindigkeitsvektor ($\vec{V}$) des Flugzeugs und aus einer Kurve besteht, die im wesentlichen einen Kreisbogen (52, 54) definiert, an das Segment (51, 53) tangential anschließt und nach oben gerichtet ist, wobei das Segment proportional zur Geschwindigkeit (V) des Flugzeugs (1) ist und der Radius des Kreisbogens vom Quadrat der Geschwindigkeit (V) und seiner Fähigkeit, nach oben zu ziehen, abhängt.

8. Vorrichtung nach einem beliebigen der vorhergehenden Ansprüche, dadurch gekennzeichnet, daß ein neuer Boden (3) periodisch von den Boden-Konstruktionsmitteln (33, 41) berechnet wird.

9. Vorrichtung nach einem beliebigen der vorhergehenden Ansprüche, dadurch gekennzeichnet, daß eine neue Lage (51, 52, 53, 54) des Flugzeugs (1) periodisch von den Vorhersagemitteln (33, 41, 43, 44, 45, 46) berechnet wird.

10. Vorrichtung nach einem beliebigen der vorhergehenden Ansprüche, dadurch gekennzeichnet, daß sie weiter einen Höhenmesser aufweist, um die gemessenen Höhen zu überprüfen.

**Claims**

1. Collision avoidance device for an aircraft (1), including:

   - means (31, 41, 42, 43) for fixing the geographical position of the aircraft,
   - means (34, 41, 43, 44, 45, 46) for predicting the aerial situation (51, 52, 53, 54) of the aircraft (1) between a first given instant and a second given instant, which are linked to the position-fixing means (31, 41, 42, 43), the altitude of the aircraft (1) being known at the first given instant,
   - means (35, 41) for comparing the predicted aerial situation of the aircraft (1) with respect to a threshold characterized in that it further comprises:
   - a database (32) containing a description of the safety altitudes to be observed, which are functions at least of the geographical sites,
   - means for constructing, by calculation (33, 41), an aerial floor (3, 71, 72, 73, 74, 75) around the vertical (4) to the aircraft (1) as a function of the geographical position of the aircraft, these means (33, 46) being linked to the position-fixing means (31, 41, 42, 43) and to the database (32), the altitude of the floor being greater than or equal to the safety altitudes around the vertical (4) to the aircraft (1), the floor being calculated throughout the flight of the aircraft, the comparison means (35, 41) comparing the predicted aerial situation of the aircraft (1) with respect to the floor constructed (3, 71, 72, 73, 74, 75), these means (35) being linked to the prediction means (34, 46) and to the construction means (33), an alarm (36, 47) being triggered when the result of the comparison (35) indicates that a predicted aerial situation (53, 54) of the aircraft is below the floor (3).

2. Device according to Claim 1, characterized in that the altitude of the aircraft (1) is defined by a pressure level.

3. Device according to Claim 2, characterized in that the means for predicting the aerial situation (51, 52, 53, 54) include a pitot-static computer (44) and means for memory storage of a reference pressure (45).

4. Device according to Claim 1, characterized in that the altitude of the aircraft (1) is defined by signals transmitted by geostationary satellites based on function of a reference geoid model.

5. Device according to any one of the preceding claims, characterized in that the means (31) for fixing the geographical position of the aircraft include the flight management system (42) and the inertial unit (43) of the aircraft.

6. Device according to any one of the preceding claims, characterized in that the database (32) comprises a description of the navigation beacons relating to each airport (61), a description of the approach procedures for each airport (61) and a description of the minimum safety heights to be observed when no airport is nearby or when the aircraft is cruising.

7. Device according to any one of the preceding claims, characterized in that the predicted aerial situation of the aircraft (1) is described by a trajectory consisting of a segment (51, 53) collinear with the speed vector (V) of the aircraft (1) and of a curve being substantially a circular arc (52, 54) tangent to the segment (51, 53) and turned upwards, the segment being proportional to the speed (V) of the aircraft (1) and the radius of the circular arc being a function of the square of the speed (V) of the aircraft and of its pull-up capability.

8. Device according to any one of the preceding claims, characterized in that a new floor (3) is calculated periodically by the construction means (33, 41).

9. Device according to any one of the preceding claims, characterized in that a new aerial situation (51, 52, 53, 54) of the aircraft (1) is calculated periodically by the prediction means (33, 41, 43, 44, 45, 46).

**10.** Device according to any one of the preceding claims, characterized in that it further includes an altimeter for verifying the measured altitudes.

FIG.1

EP 0 597 760 B1

FIG.2

EP 0 597 760 B1

FIG.3

FIG.4

EP 0 597 760 B1

FIG.5

FIG.6